# EUROPÄISCHE PATENTSCHRIFT

(11) **EP 0 527 435 B1**
(45) Veröffentlichungstag und Bekanntmachung des Hinweises auf die Patenterteilung: **02.11.1994**
(21) Anmeldenummer: 92113413.6
(22) Anmeldetag: 06.08.1992
(51) Int. Cl.: G01F 23/24

(54) **Verfahren und Vorrichtung zur konduktiven Füllstand-Grenzwertmessung**
Procedure and device for conductive discrete filling level measurement
Procédé et dispositif pour la mesure conductive discrète d'un niveau

(30) Priorität: 07.08.1991 DE 4126091
(43) Veröffentlichungstag der Anmeldung: 17.02.1993
(73) Patentinhaber: VEGA Grieshaber GmbH & Co., D-77709 Wolfach (DE)
(72) Erfinder: Raffalt, Felix, Dipl.-Ing. (FH), W-7612 Fischerbach (DE)
(74) Vertreter: Patentanwälte Westphal, Buchner, Mussgnug Neunert, Göhring

(56) Entgegenhaltungen:
- DE-A- 3 322 825
- DE-A- 3 330 981

## Beschreibung

Die Erfindung betrifft ein Verfahren und eine Vorrichtung zur konduktiven Füllstand-Grenzwertmessung gemäß dem Oberbegriff des Patentanspruchs 1 bzw. 5.

Bei bekannten Verfahren und Vorrichtungen zur Füllstand-Grenzwertmessung wird grundsätzlich mit Wechselspannung im Sondenstrom-Meßkreis gearbeitet, da die Verwendung von Gleichspannung infolge hierbei auftretender Elektrolyse- oder Polarisationseffekte ungeeignet ist. Siehe z.B. DE-A-3322825.

Meist wird mit einer Rechteckspannung als Wechselspannung gearbeitet.

In der Praxis sind in vielen Fällen zwischen der Meßsonde und dem Auswertgerät Verbindungsleitungen von erheblicher Länge bis zu 1000 m erforderlich. Dies führt zu unvermeidlichen Leitungskapazitäten, die parallel zum zu detektierenden Meßwiderstand liegen und das Meßergebnis verfälschen. Die Kabelkapazität bildet dabei trotz der relativ niedrigen Meßfrequenz einen störenden, parallel zur Elektrode liegenden Blindleitwert. Dies kann zur Folge haben, daß der Grenzwertschalter trotz noch unbedeckter Elektrode bereits anspricht. Zudem ist eine Detektion schwach leitender Füllgüter bzw. eine hochohmige Schleifenstromüberwachung zur Kabelbruchdetektion nicht möglich.

Bei der Verwendung einer Rechteckspannung liegt am Sondenstrom-Meßkreis für ein erstes Zeitinvervall ein konstanter Spannungswert U₁ an. Am Ende dieses ersten Zeitintervalls kehrt sich das Vorzeichen der Spannung um und am Sondenstrom-Meßreis liegt für ein zweites Zeitintervall der Spannungswert - U₁ an. Nachteilig bei diesem Spannungsverlauf ist, daß kontinuierlich eine konstante Spannung U₁ bzw. - U₁ am Sondenstrom-Meßkreis anliegt und dies zu Elektrolyse- bzw. Polarisationseffekten führt.

Der Erfindung liegt die Aufgabe zugrunde, ein Verfahren und eine Vorrichtung zur konduktiven Füllstand-Grenzwertmessung zu schaffen, das bzw. die eine weitgehende Unterdrückung der Auswirkungen von Blindstromkomponenten sowie von Elektrolyse- oder Polarisationseffekten in einfacher Weise ermöglicht.

Diese Aufgabe wird mit den im Patentanspruch 1 bzw. 5 genannten Merkmalen gelöst.

Bei der Erfindung wird der Meßstromkreis somit mit rechteckförmiger Spannung gespeist. Aufgrund des Einsatzes eines rechteckförmigen Ansteuersignals besitzt dieses mit Ausnahme der Flankenübergänge keine Steigung, so daß die Kabelkapazität unmittelbar im Anschluß an jede Flanke einen gemäß einer e-Funktion abfallenden Blindstromverlauf hervorruft, der kurz vor dem nächsten Flankenübergang bereits weitestgehend abgeklungen ist. Hierbei besteht die Möglichkeit, durch mehrfache Abtastung des Spannungsverlaufs während einer jeweiligen Halbperiode, z. B. in regelmäßigen Abständen, den Spannungsverlauf zu rekonstruieren und hieraus Blindstromanteil und Real-Anteil (ohmscher Anteil) zu ermitteln. Die ohmsche Komponente repräsentiert dabei den wirksamen Meßstromkreis-Widerstand, so daß klar zwischen flüssigkeitsbedeckter und noch unbedeckter Elektrode unterschieden werden kann oder bei analoger Auswertung sogar eine relativ zuverlässige Aussage über die Füllstandshöhe erzielbar ist. Der Blindstromanteil läßt sich somit rechnerisch ermitteln und unterdrücken, was zu einer hohen Detektionsgenauigkeit führt.

In besonders einfacher, bevorzugter Ausgestaltung wird statt einer Mehrfachmessung je Halbperiode nur eine einzige Messung, und zwar jeweils unmittelbar vor der nachfolgenden Spannungsflanke, durchgeführt. Zu diesem Zeitpunkt ist die Blindstromkomponente bereits weitestgehend abgeklungen, so daß der Meßwert nahezu ausschließlich durch die ohmsche Komponente bestimmt ist. In dieser Ausführungsform ist folglich keinerlei Berechnung samt Mehrfach-Abtastung erforderlich, so daß der schaltungstechnische Aufbau äußerst einfach ist. Diese Variante läßt sich unter Nutzung preisgünstiger elektronischer Digitalbausteine in sehr einfacher und effektiver Weise realisieren. Ferner ergibt sich eine äußerst temperaturstabile Arbeitsweise.

Die Erfindung ermöglicht somit aufgrund der hohen Detektionsgenauigkeit nicht nur eine eindeutige Füllstandsdetektion bei gut leitenden Flüssigkeiten sondern auch eine Überwachung schwach leitender Füllgüter.

Vorteilhafterweise ermöglicht die Erfindung weiterhin eine automatische Selbstüberwachung des Meßsystems auf Unterbrechung der Meßelektrodenzuleitung. Dies ist insbesondere bei Einsatz konduktiver Füllstand-Grenzwertschalter zur Überwachung leitfähiger, wassergefährdender Flüssigkeiten nach den Richtlinien des deutschen Wasserhaushaltsgesetzes (WHG) von Bedeutung. Die Erfindung bietet nämlich die Möglichkeit, parallel zum Meßsondenstromkreis einen diskreten realen Widerstand zu schalten, dessen Widerstandswert vorzugsweise in Höhe des höchstzulässigen Meßstromkreis-Widerstands liegt, und diesen zusätzlichen Widerstand ("WHG-Prüfwiderstand") oder den Meßstromkreis-Widerstand selbst ständig auf Überschreiten seines Widerstandswerts hin zu überwachen. Solche Überwachungen sind ohne Eliminierung des Blindstromanteils kaum realisierbar, da der niedrige Wechselstromwiderstand langer Verbindungsleitungen keine hochohmige Schleifenstromüberwachung zuläßt.

Von Vorteil ist weiterhin, daß das Meßsignal keine pn-Übergänge durchsteuern muß, so daß die Meßspannung sehr klein gewählt werden kann. Hierdurch wird die Elektrodenlebensdauer in aggressiven Medien verlängert. Außerdem ergeben sich niedrige Energiewerte, was für den Betrieb in explosionsgeschützten Bereichen vorteilhaft ist.

Von Vorteil ist es, den Meßstrom bzw. den diesem entsprechenden Wert während der zweiten Hälfte, vorzugsweise dem letzten Viertel und insbesondere dem letzten Zehntel, der Halbperiode zwischen benachbarten Umschaltflanken abzufragen, da die Blindkomponente in diesem Bereich schon weitgehend abgeklungen ist und folglich keine nennenswerten Signalverfälschungen mehr verursacht. Der dem Meßstrom entsprechende Wert kann hierbei in einfacher Weise dadurch gewonnen werden, daß der Meßstrom einem Meßwiderstand zugeführt wird, an welchem eine meßstromproportionale Spannung abfällt. Dieser Spannungswert kann über eine Vergleicheranordnung problemlos mit einem Referenzspannungswert verglichen werden, ohne daß hierbei eine ins Gewicht fallende Belastung des Meßstroms und/oder der Meßspannung auftritt.

Der Meßstrom kann während jeder zweiten Halbwelle der rechteckförmigen Versorgungsspannung oder auch in noch größeren Periodenabständen abgetastet werden. Die einmalige Abtastung pro Periode hat den Vorteil, daß das Abtastsignal jeweils synchron mit der Versorgungsspannungsfrequenz erzeugt werden kann, was schaltungstechnisch einfach zu realisieren ist. Demgegenüber hat die Abtastung während jeder Halbwelle neben höherer Genauigkeit und Störsicherheit auch den Vorteil, daß eventuell unsymmetrisches Leitfähigkeitsvermögen der hinsichtlich ihres Füllstands zu überwachenden Flüssigkeit auf jeden Fall zu einer entsprechenden Stromerhöhung zumindest einer Polarität führt, die zuverlässig erfaßt und ausgewertet werden kann.

Die erfindungsgemäße Vorrichtung weist als Spannungsgenerator einen Rechteck-Oszillator auf, der eine Rechtecksignalspannung erzeugt. Bei schaltungstechnisch sehr einfachem Aufbau wird somit eine definierte Rechteckspannung gewährleistet. Die Frequenz kann vorzugsweise ca. 110 Hz betragen. Bei diesem Frequenzwert ist einerseits jede Halbwelle so lang, daß der Blindstromanteil ausreichend abklingen kann. Andererseits reicht diese Frequenz aus, eine hohe Meßsignalrate zu erzielen.

Der Vergleicheranordnung ist in bevorzugter Ausgestaltung ein Abtast- und Halteglied nachgeschaltet, das periodisch bei jeder oder jeder zweiten Halbwelle der Ausgansspannung des Rechteck-Oszillators angesteuert wird. Der Taktabstand kann zwar auch größer sein, was jedoch dann nachteiligerweise zu einem entsprechenden Informationsverlust führt, da dazwischenliegende Halbwellen nicht mehr abgefragt und ausgewertet werden. Der Einsatz eines Abtast- und Halteglieds ermöglicht die periodisch zeitdiskrete Übernahme des Meßwertes zu definiert festgelegten Abtast-Zeitpunkten, an denen der Blindstromanteil bis auf einen unkritischen Rest abgeklungen ist. Dies erfolgt unabhängig vom Wert des Ausgangssignals der Vergleichsanordnung, welches gegebenenfalls durch hohe Blindstromanteile des Meßwertes nach jeder Umschaltflanke bestimmt sein könnte. Vorhergehende oder nachfolgende Änderungen des Vergleicher-Ausgangssignals beeinflussen das Ausgangssignal der Abtast- und Halteschaltung folglich nicht. Vorzugsweise ist die Ansteuerung des Abtast- und Halteglieds so gewählt, daß dieses nur jeweils in der zweiten Hälte einer Halbwelle, vorzugsweise in deren letzten Viertel oder Zehntel, getaktet wird und somit die Meßspannung einen bereits verhältnismäßig stationären, den ohmschen Meßstromkreiswiderstand repräsentierenden Wert angenommen hat.

In bevorzugter Ausgestaltung wird der Takt für das Abtast- und Halteglied von der Ausgangsspannung des Rechteck-Oszillators abgeleitet, und zwar unter Phasenversatz gegenüber der an den Meßstromkreis angelegten Spannung. Dies hat den vorteilhaften Effekt, daß die Umschaltflanken und der Abtasttakt stets, selbst bei eventuellen Frequenzverschiebungen des Rechteck-Oszillators, im Gleichtakt sind. Die Phasenlage des Abtasttaktes kann durch entsprechende Einstellung des Phasenversatzes gezielt derart festgelegt werden, daß die Abtastung stets kurz vor einer jeweiligen Umschaltflanke auftritt, d. h. das Ausgangssignal der Vergleicheranordnung zu jeweils diesem Zeitpunkt abgefragt wird.

Durch den in bevorzugter Ausgestaltung vorhandenen RC-Integrator am Ausgang des Abtast- und Halteglieds lassen sich Stör-Überlagerungen glätten, die andernfalls zu einem unerwünschten Ansprechen des ausgangsseitigen Schaltrelais führen könnten. Die Störsicherheit wird hierdurch noch weiter erhöht.

Vorzugsweise ist der Vergleicher-, Abtast- und Halteanordnung eine Triggerschaltung nachgeschaltet, die zusätzlich über eine Rückkopplungsschaltung mit der Vergleicheranordnung verbunden ist. Durch diese Rückkopplungsschaltung lassen sich die Potentiale an der Vergleicheranordnung bei einem Schaltvorgang der Triggerschaltung so umsteuern, daß der aktuelle Schaltzustand erst bei größeren Signalabweichungen wieder verlassen wird. Hierdurch wird ein Hystereseverhalten erzielt, durch das Flattererscheinungen des ausgangsseitig angeschlossenen Relais, das zur Erzeugung von Warnsignalen und/oder Füllungssteuersignalen dient, unterdrückt werden.

Gemäß einer Alternative kann die Rückkopplungsschaltung einen Spannungsteiler umfassen, der mit einem Anschluß mit dem Ausgang der Triggerschaltung verbunden ist und somit potentialmäßig durch die jeweilige Ausgangsspannung an der Triggerschaltung bestimmt ist. Durch die bei Ausgangssignalumschaltungen auftretenden Potentialverschiebungen an dem mit der Vergleicheranordnung verbundenen Abgriff des Widerstandsteilers läßt sich somit das Referenzpotential oder die potentialmäßige Lage des Ist-Signals so beeinflussen, daß das gewünschte Hystereseverhalten erzielt wird. Die Rückkopplung kann auch durch einen Transistor bewirkt werden, dessen Schaltzustand durch die Triggerschaltung gesteuert wird und der die Widerstandsverhältnisse eines Spannungsteilers, beispielsweise durch Zuschaltung eines Parallelwiderstandes, gezielt variieren kann.

Die Erfindung ermöglicht in vorteilhafter Weise die Parallelschaltung eines Widerstands zur Meßsonde, so daß - unabhängig vom jeweiligen Flüssigkeitspegel - stets ein endlicher Widerstand des Meßstromkreises vorliegt. Der Maximalwiderstand des Meßstromkreises kann somit bei intaktem Stromkreis nicht über einen entsprechenden Widerstandswert ansteigen, so daß der Realteil des Meßstroms nicht unter einen entsprechenden Wert absinken kann. Durch Überwachung der Größe des Stromflusses ist es somit möglich, Störungen der Leitungsverbindungen oder Leitungsunterbrechungen, die sich als starkes Absinken des Meßstroms bemerkbar machen, zu erkennen und entsprechende Sicherheitsmaßnahmen einzuleiten.

In alternativer Ausgestaltung kann die Richtung der Stromspeisung der Meßsonde und des Meßwiderstands über eine getaktete Schaltanordnung periodisch umgepolt werden, so daß die Meßsonde mit Rechteck-Wechselspannung gespeist wird. Die Schaltertaktung kann durch den Rechteck-Oszillator erfolgen, so daß die Anforderungen an dessen Rechteck-Ausgangsform etwas gemildert sind.

Dem Rechteck-Oszillator kann ein Frequenzteiler nachgeschaltet sein, dessen Ausgangssignal die Schalteranordnung steuert. Hierdurch wird erreicht, daß die Rechteck-Wechselspannung an der Meßsonde entsprechend verringerte Frequenz besitzt und beide Halbperioden exakt gleich lang sind. Die höhere Ausgangsfrequenz des Rechteck-Oszillators kann dabei zugleich zur Taktung des Abtast- und Halteglieds eingesetzt werden, so daß dieses mit doppelt so hoher Frequenz wie die Meßsonde angesteuert wird und bei jeder Halbperiode ein Abtastsignal erzeugt. Hierdurch läßt sich der Meßstrom noch genauer bei jeder Halbperiode abfragen.

In einer weiteren alternativen Ausgestaltung liefert der Rechteck-Oszillator ein Ausgangssignal, das periodisch den Wert 0 V annimmt. In diesen spannungslosen Zeitintervallen werden unerwünschte Elektrolyse- und Polarisationseffekte unterdrückt. Diese Unterdrückung von unerwünschten Elektrolyse- und Polarisationseffekten ist unabhängig vom Zeitpunkt bzw. Zeitraum der Auswertung des Meßstromes. Dieser Effekt ist deshalb unabhängig davon, ob die Auswertung am Ende eines Rechteckimpulses oder über den gesamten Zeitraum eines Rechteckimpulses erfolgt.

Die Erfindung wird nachstehend anhand von Ausführungsbeispielen unter Bezugnahme auf die Zeichnungen näher beschrieben. Es zeigen:
- Figur 1: Schaltbild eines Ausführungsbeispieles der erfindungsgemäßen Vorrichtung zur konduktiven Füllstand-Grenzwertmessung,
- Figur 1a: Schaltbild eines zweiten Ausführungsbeispieles der erfindungsgemäßen Vorrichtung,
- Figur 2: Schaltbild eines dritten Ausführungsbeispieles der erfindungsgemäßen Vorrichtung,
- Figur 3: Signalverläufe zur Veranschaulichung der Spannungs- und Stromverhältnisse bei der Abtastung nach einem ersten Vorschlag und
- Figur 4: Signalverläufe zur Veranschaulichung der Spannungs- und Stromverhältnisse bei der Abtastung nach einem zweiten Vorschlag.

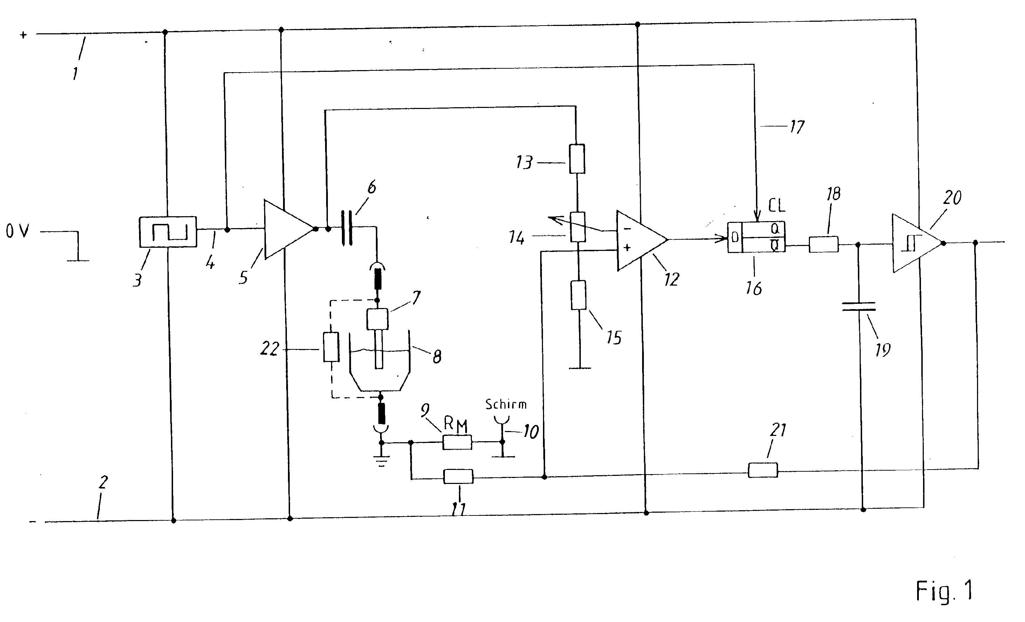

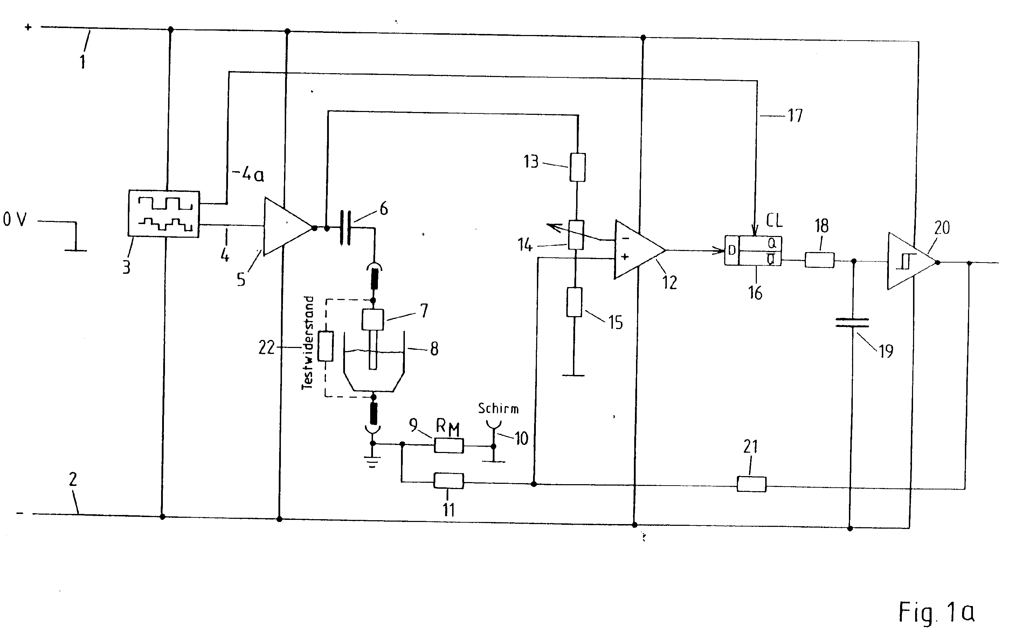

Bei dem in Figur 1 gezeigten Ausführungsbeispiel der Vorrichtung zur konduktiven Füllstand-Grenzwertmessung ist zwischen eine Plus-Leitung 1 und eine Minus-Leitung 2 ein Rechteck-Oszillator 3 geschaltet, der auf einer Ausgangsleitung 4 ein rechteckförmiges Spannungssignal erzeugt.

Die Ausgangsleitung 4 ist mit dem Eingang eines durch die Leitungen 1 und 2 mit Spannung versorgten Treibers 5 verbunden, der über einen Trennkondensator 6 eine Meßsonde 7 mit Rechteckspannung speist. Die Meßsonde 7 ist in einen hinsichtlich der Füllstandshöhe zu überwachenden Behälter 8 eingeführt, wobei sich der Stromfluß zwischen der Meßsonde 7 und dem Behälter 8 in Abhängigkeit von der Füllstandshöhe der im Behälter 8 befindlichen Flüssigkeit verändert.

Der über die Meßsonde 7 und den Behälter 8 fließende Meßstrom erzeugt an einem Meßwiderstand 9, der einerseits mit dem Behälter 8 und andererseits mit einem auf Schaltungsnull liegenden Schirm 10 elektrisch leitend verbunden ist, einen entsprechenden Spannungsabfall, der als Meßspannung dient.

Die am Meßwiderstand 9 auftretende Meßspannung wird über einen Widerstand 11, der mit einem Anschluß zwischen den Behälter 8 und den Meßwiderstand 9 geschaltet und mit dem anderen Anschluß mit einem Eingang eines Vergleichers 12 verbunden ist, als für den Meßstrom repräsentativer Wert in Form einer Ist-Spannung an den Vergleicher 12, der zusammen mit zugehörigen Schaltungswiderständen eine Vergleicheranordnung bildet, angelegt.

Die Referenzspannung des Vergleichers 12 wird über einen Spannungsteiler aus Widerständen 13, 14 und 15 gewonnen, die zwischen den Ausgang des Treibers 5 einerseits und Nullpotential andererseits geschaltet sind. Der Widerstand 14 ist als Potentiometer ausgelegt, um die Größe der am Potentiometerabgriff abgegriffenen und an den anderen Vergleicher-Eingang angelegten Referenzspannung variieren zu können.

Mit dem Ausgang des Vergleichers 12 ist ein Abtast- und Halteglied in Form eines taktgesteuerten D-Flipflops 16 verbunden, das bei Auftreten eines Taktsignals an seinem Takteingang CL das am D-Eingang anliegende Signal übernimmt. Der Takt zur Steuerung des D-Flipflops 16 wird über eine Taktleitung 17 gewonnen, die direkt mit dem Ausgang 4 des Rechteck-Oszillators 3 verbunden ist. Durch den Treiber 5 und weitere Komponenten wird eine geringfügige Phasenverschiebung bewirkt, so daß der Flankenwechsel des Taktsignals auf der Taktleitung 17 kurz vor den Übergangsflanken des Meßstroms durch die Meßsonde 7 auftritt. Der Ausgang des Vergleichers 12 wird somit jeweils kurz vor den Umschaltflanken der Rechteckspannung an der Meßsonde 7 abgefragt.

Am Ausgang des D-Flipflops 16 liegt ein RC-Integrator, bestehend aus einem Widerstand 18 und einem Kondensator 19, der Glättungsfunktion ausübt und kurzfristige Störungen unterdrückt. Der Widerstand 18 ist in Reihe zwischen das D-Flipflop 16 und eine ausgangsseitige Triggerstufe 20 geschaltet, während der Kondensator 19 zwischen den Eingang der Triggerstufe 20 und die Minus-Leitung 2 geschaltet ist.

Zwischen den Ausgang der Triggerstufe 20, der beispielsweise ein ausgangsseitiges Relais steuert, und den mit dem Vergleicher 12 verbundenen Anschluß des Widerstands 11 ist ein Widerstand 21 geschaltet, wodurch eine Rückkopplung zwischen Triggerstufe 20 und Vergleicher 12 bewirkt wird. Die Widerstände 11 und 21 bilden einen Spannungsteiler, dessen Abgriff mit dem Ist-Eingang des Vergleichers 12 verbunden ist. Bei Umschaltung der Triggerstufe 20 verändert sich auch das Bezugspotential des Spannungsteilers 11, 21 und folglich die potentialmäßige Lage des Ist-Werts am Vergleicher 12. Bei Plus-Potential am Ausgang der Triggerstufe 20 ist auch das Potential am Ist-Eingang des Vergleichers 12 zum positiven Potential hin verschoben, so daß nur Eingangssignale mit höheren Pegeln als jene, die zur Umschaltung geführt haben, die Polarität des Vergleicher-Ausgangs ändern können. Folglich werden durch die Funktion des RC-Integrators 18, 19, der Triggerstufe 20 und der durch den Rückkopplungswiderstand 21 zwischen Triggerausgang und Vergleichereingang bewirkten Hysterese Relais- Flattererscheinungen vermieden.

Beim vorliegenden Ausführungsbeispiel wird die Referenzspannung (am Potentiometer 14) in gleicher Weise wie die Meßsondenspannung von der Oszillatorspannung abgeleitet, so daß eventuelle Betriebsspannungsänderungen ohne Einfluß auf das Meßergebnis bleiben.

Parallel zur Meßsonde 7 und Behälter 8 kann ein Testwiderstand 22 geschaltet sein, um den maximalen Widerstand des Meßstromkreises auf einen endlichen Wert zu legen. Ein Absinken des Meßstroms unter den diesem maximalen Widerstand entsprechenden Wert bedeutet somit eine Leitungsstörung oder -unterbrechung, die entsprechende Sicherheitseingriffe erfordert. Das Absinken des Meßstroms kann durch Überwachung der Meßspannung auf eine Minimalgröße und Alarmgabe bei Unterschreiten dieser Minimalgröße kenntlich gemacht werden.

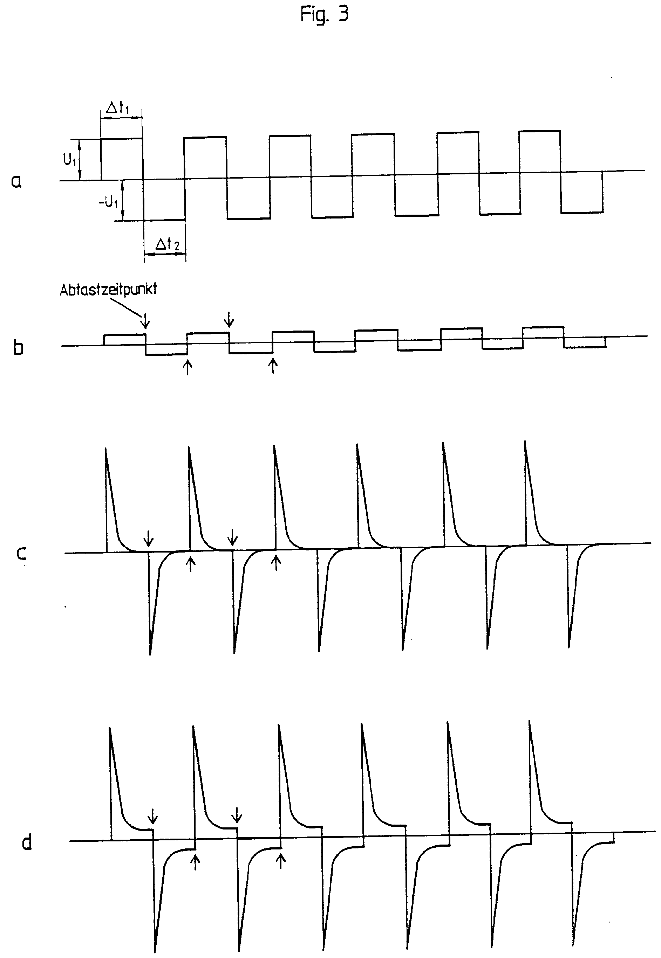

In Figur 3a ist schematisch der Signalverlauf der Rechteckspannung, in Figur 3b des Meßstroms und der Abfragezeitpunkte dargestellt. Die Rechteckspannung besteht aus einer Folge von positiven und negativen Rechteckpulsen, die direkt aneinander anschließen. Während des positiven Rechteckpulses von der Zeitdauer Δt₁ liegt die Spannung U₁ an der Meßsonde 7 an. Während des negativen Rechteckpulses von der Zeitdauer Δt₂ liegt die Spannung - U₁ an der Meßsonde 7 an. Dieser Spannungsverlauf ist in Figur 3a dargestellt.

In Figur 3b ist der Stromverlauf im Sonden-Stromkreis 9 bei einer mit Flüssigkeit bedeckten Meßsonde für den Fall dargestellt, daß die auftretenden Kapazitäten, wie z. B. Kabelkapazitäten, vernachlässigbar sind. Die Auswertung des Meßsignals erfolgt jeweils kurz vor dem Null-Durchgang der Ausgangsspannung des Rechteck-Oszillators 3.

Figur 3c zeigt den Stromverlauf im Sondenstromkreis 9 bei unbedeckter Meßelektrode, wobei jedoch die Kabelkapazität nicht vernachlässigbar ist. Die Spannung am Meßwiderstand 9 steigt am Anfang des Intervalls Δt₁ steil an und fällt danach nach einer e-Funktion auf den Wert 0 V ab. Die Auswertung geschieht wiederum am Ende des Zeitintervalls Δt₁. Zu diesem Zeitpunkt ist die Spannung bereits auf einen unmerklichen Anteil abgefallen, so daß im wesentlichen nur der Realteil des Stromes erfaßt wird und somit die ohmsche Komponente des Meßstromkreises detektiert wird. Zu Beginn des Intervalls Δt₂ fällt die Spannung am Meßwiderstand 9 rasch ab und steigt dann nach einer e-Funktion auf den Wert 0 V an. Die Auswertung geschieht wiederum am Ende des Intervalls Δt₂. Zu diesem Zeitpunkt unterscheidet sich der Spannungswert nur noch unmerklich von dem Wert 0 V.

Die Frequenz von Rechteckspannung und Meßstrom liegt beim Ausführungsbeispiel bei 110 Hz.

In Figur 3d ist der Stromverlauf im Sondenstromkreis 9 bei mit Flüssigkeit bedeckter Meßelektrode dargestellt, wobei die Kabelkapazitäten nicht vernachlässigbar sind. Am Anfang des Intervalls Δt₁ steigt die Spannung rasch an und fällt dann nach einer e-Funktion auf einen konstanten Wert ab. Die Auswertung geschieht wiederum am Ende des Intervalls Δt₁. Am Anfang des Zeitintervalls Δt₂ fällt die Spannung dann rasch ab und steigt nach einer e-Funktion auf einen konstanten Wert an. Die Auswertung geschieht wiederum am Ende des Intervalls Δt₂.

In Figur 1a ist das Schaltbild eines zweiten Ausführungsbeispiels dargestellt. Bei diesem Ausführungsbeispiel besitzt der rechte Generator 3 zwei Ausgangsleitungen 4 bzw. 4a. Die Ausgangsleitung 4 ist mit dem Eingang des Treibers 5 verbunden. Die Ausgangsleitung 4a ist mit dem Takteingang des D-Flip-Flop 16 verbunden. Der Rechteck-Oszillator 3 erzeugt ein rechteckförmiges Spannungssignal auf der Ausgangsleitung 4. Das rechteckförmige Spannungssignal besteht aus einer Folge von positiven und negativen Rechteckimpulsen, zwischen denen die Spannung für gewisse Zeiten den Wert 0 V annimmt. Am Ausgang 4a des Rechteck-Oszillators 3 liegt eine Folge von positiven und negativen Rechteckimpulsen der gleichen Frequenz wie am Ausgang 4 an, jedoch ohne daß die Spannung den Wert 0 V annimmt.

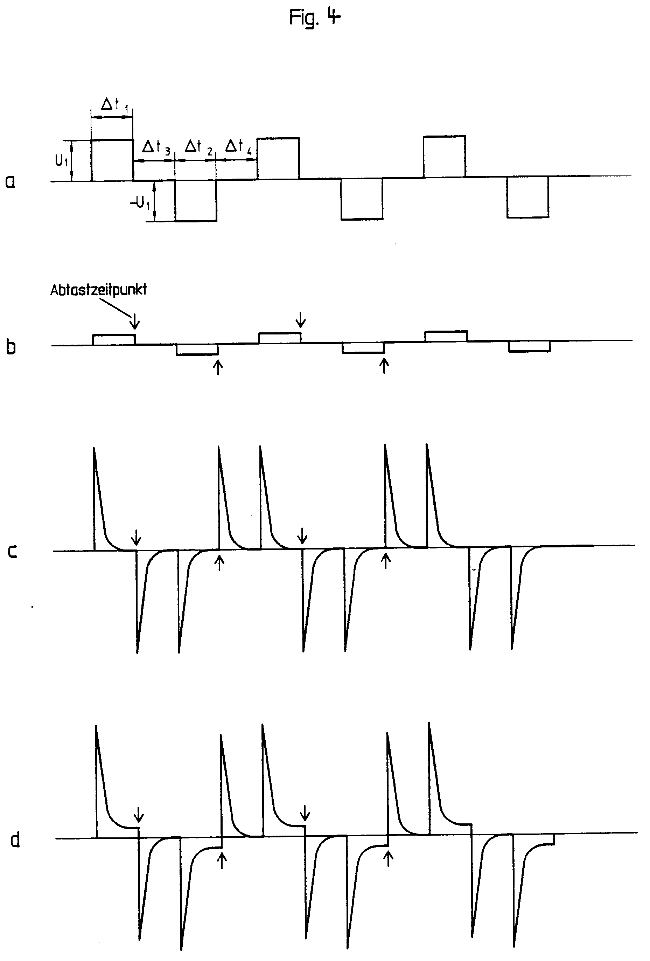

Der Spannungsverlauf gemäß Ausführungsbeispiel Figur 1a an der Ausgangsleitung 4 des Rechteck-Oszillators 3 ist in Figur 4a dargestellt. Für ein gewisses Zeitintervall Δt₁ liegt der Spannungswert U₁ an. Am Ende des Zeitintervalls Δt₁ fällt die Spannung auf den Wert 0 V ab. Am Ende des Intervalls Δt₃ fällt die Spannung auf den Wert - U₁. Dieser Spannungswert liegt während des gesamten Zeitintervalls Δt₂ an. Am Ende des Zeitintervalls Δt₂ steigt die Spannung wieder auf den Wert 0 V an. Dieser Spannungswert liegt während des gesamten Zeitintervalls Δt₄ an. Das periodische Spannungssignal wiederholt sich nach Ablauf des Zeitintervalls Δt₄.

In Figur 4b ist der Stromverlauf im Sondenstromkreis 9 bei einer mit Flüssigkeit bedeckten Meßsonde für den Fall dargestellt, daß die auftretenden Kapazitäten, wie z. B. Kabelkapazitäten, vernachlässigbar sind. Die Auswertung des Meßsignals erfolgt jeweils kurz vor dem Umspringen der Ausgangsspannung des Rechteck-Oszillators 3 auf den Spannungswert 0 V.

Figur 4c zeigt den Stromverlauf im Sondenstromkreis 9 bei unbedeckter Meßelektrode, wobei jedoch die Kabelkapazitäten nicht vernachlässigbar sind. Die Spannung am Meßwiderstand 9 steigt am Anfang des Intervalls Δt₁ steil an und fällt nach einer e-Funktion auf den Wert 0 ab. Die Auswertung geschieht wiederum am Ende des Zeitintervalls Δt₁. Zu diesem Zeitpunkt ist die Spannung bereits auf einen unmerklichen Anteil abgefallen. Zu Beginn des Intervalls Δt₂ fällt die Spannung am Meßwiderstand 9 rasch ab und steigt dann nach einer e-Funktion auf den Wert 0 an. Die Auswertung geschieht wiederum am Ende des Intervalls Δt₂. Zu diesem Zeitpunkt unterscheidet sich der Spannungswert nur noch unmerklich vom Wert 0 V.

In Figur 4d ist der Stromverlauf im Sondenstromkreis 9 bei mit Flüssigkeit bedeckter Meßelektrode dargestellt, wobei die Kabelkapazitäten nicht vernachlässigbar sind. Am Anfang des Intervalls Δt₁ steigt die Spannung rasch an und fällt dann nach einer e-Funktion auf einen konstanten Wert ab. Die Auswertung geschieht wiederum am Ende des Intervalls Δt₁. Am Anfang des Intervalls Δt₂ fällt die Spannung rasch auf einen negativen Wert ab und steigt dann n einer e-Funktion auf einen konstanten negativen Wert an. Die Auswertung erfolgt wiederum am Ende des Intervalls Δt₂.

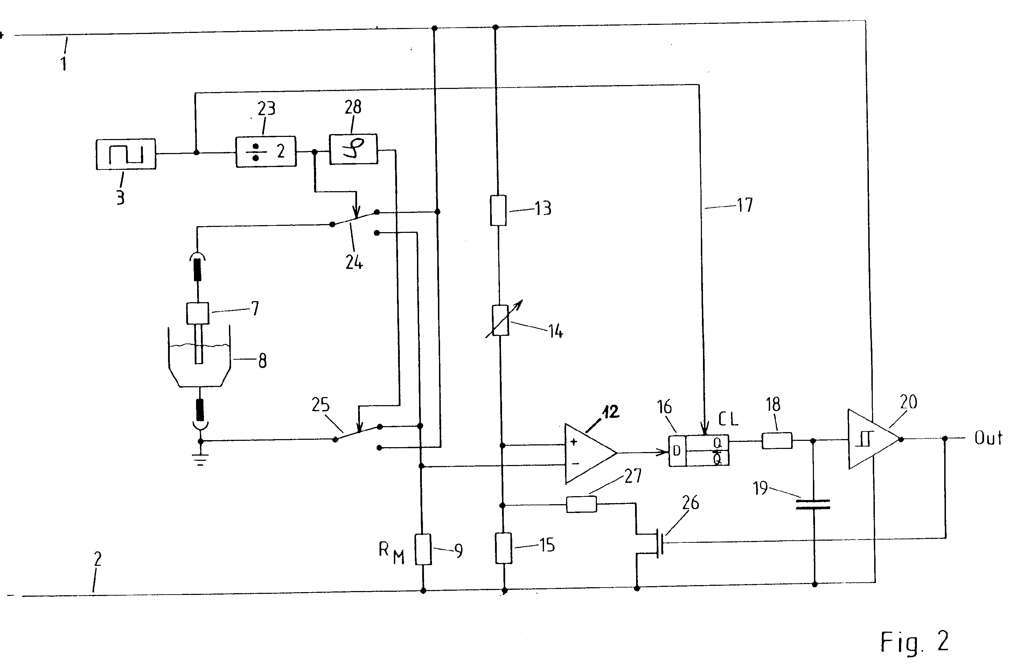

In Figur 2 ist das Schaltbild der Vorrichtung gezeigt, mit welcher die Signalverläufe gemäß Figur 4 erzielbar sind. In dem Schaltbild sind dieselben Komponenten wie beim ersten Ausführungsbeispiel gemäß Figur 1 mit denselben Bezugszeichen bezeichnet. Bezüglich deren Beschreibung wird auf die vorstehenden Ausführungen verwiesen.

Im Unterschied zum ersten Ausführungsbeispiel wird bei diesem Ausführungsbeispiel die Rechteckausgangsspannung des Rechteck-Oszillators 3 direkt über einen Frequenzteiler 23, der als Frequenzhalbierer geschaltet ist, an die Meßsonde 7 angelegt. Der Frequenzhalbierer steuert zwei Umschalter 24, 25, wobei der Umschalter 25 über einen Phasenschieber 28 angesteuert wird. Die Umschalter 24, 25 ändern entsprechend ihren Schaltzustand, so daß ihre Schaltfrequenz halb so groß wie die Ausgangsfrequenz des Rechteck-Oszillators 3 ist.

Durch die phasenverschobene Arbeitsweise der Umschalter 24, 25 entstehen die spannungslosen Pausen Δt₃ und Δt₄ entsprechend Figur 4a. Die Pausen sind proportional zu dem durch den Phasenschieber 28 erzeugten Verschiebewinkel φ der Ansteuersignale. Folgende Pausendauer tₚ ergibt sich für die Verschiebewinkel φ = 0°,90° und 180°.
tₚ = 0 % für φ = 0°
tₚ = 50 % für φ = 90°
tₚ = 100 % für φ = 180°

In der gezeichneten Stellung der Umschalter 24, 25 ist die Meßsonde 7 mit der Plus-Leitung 1 verbunden, während der Meßanschluß am Behälter 8 über den Umschalter 25 mit dem Meßwiderstand 9 verbunden ist. Bei Umschaltung der Schaltstellung der Umschalter 24, 25 wird die Meßsonde mit dem Meßwiderstand 9 verbunden, während der Behälteranschluß über den Umschalter 24 mit der Plus-Leitung 1 verbunden ist. Der Meßstromkreis wird somit mit rechteckförmiger Wechselspannung gespeist.

Die am Meßwiderstand 9 abfallende Meßspannung liegt direkt am Negativ-Eingang des Vergleichers 12 an, dessen anderer Anschluß mit dem Spannungsteiler 13, 14 und 15 verbunden ist. Der Spannungsteiler 13, 14, 15 ist bei diesem Ausführungsbeispiel direkt zwischen die Plus-Leitung 1 und die Minus-Leitung 2 geschaltet und liegt also an festem Potential.

Bei diesem Ausführungsbeispiel wird das dem Vergleicher 12 nachgeschaltete D-Flipflop 16 über die Taktleitung 17 mit der doppelten Frequenz der Spannung im Sondenstromkreis getaktet. Dies ist durch den Frequenzteiler 23 bedingt. Durch diese doppelte Abtastfrequenz wird jede Halbwelle der Meßspannung einmal abgefragt, wobei auch hier die Phasenlage so gewählt ist, daß der Abfragezeltpunkt stets nach Abklingen des Blindanteils kurz vor der nächsten Umschaltflanke liegt.

Die Rückkopplungsschaltung ist beim Ausführungsbeispiel gemäß Figur 2 abgeändert. Sie umfaßt einen Feldeffekttransistor 26, dessen Gate mit dem Ausgang der Triggerstufe 20 verbunden ist. Parallel zum Widerstand 15 des Spannungsteilers 13, 14 und 15 liegt eine Reihenschaltung aus einem Widerstand 27 und dem Feldeffekttransistor 26. Bei durchgeschaltetem Feldeffekttransistor 26 ist der Widerstand 27 somit dem Widerstand 15 parallel geschaltet, so daß die Referenzspannung am "+"-Eingang des Vergleichers 12 auf einen niedrigeren Wert herabgesetzt wird. Beim Öffnen des Feldeffekttransistors 26 ist der Stromfluß durch den Widerstand 27 unterbrochen, so daß der Widerstandswert der Parallelschaltung der Elemente 15, 26 und 27 nur noch durch den Widerstand 15 bestimmt ist. Der Feldeffekttransistor 26 ist selbstsperrend ausgelegt, so daß er bei der normalerweise negativen Ausgangsspannung der Ausgangsstufe 20 nicht durchgeschaltet ist. Lediglich wenn bei Ansprechen der Füllstands-Überwachungsschaltung der Ausgangspegel der Triggerstufe 20 wechselt, schaltet der Feldeffekttransistor 26 durch, wodurch der Widerstand 27 potentialmäßig parallel zum Widerstand 15 gelegt wird. Durch die hierdurch bewirkte Steuerung der Lage des Referenzpotentials am Vergleicher 12 wird, wie auch beim ersten Ausführungsbeispiel, eine Hysterese erreicht, wodurch Relais-Flattererscheinungen vermieden werden.

## Patentansprüche

1. Verfahren zur konduktiven Füllstands-Grenzwertmessung, bei dem ein eine Meßsonde aufweisender Meßstromkreis mit rechteckförmiger Spannung gespeist wird und Leitwertänderungen im Meßstromkreis, insbesondere durch Vergleich eines dem im Meßstromkreis fließenden Stromes entsprechenden Wertes mit einem festen Referenzwert erfaßt werden, dadurch gekennzeichnet, daß der dem Strom entsprechende Wert ausschließlich in der zweiten Hälfte eines Intervalles zwischen jeweils zwei benachbarten Umschaltflanken der rechteckförmigen Spannung abgefragt und ausgewertet wird.

2. Verfahren nach Anspruch 1, dadurch gekennzeichnet, daß der dem Strom entsprechende Wert ausschließlich während des letzten Viertels, vorzugsweise des letzten Zehntels, des Intervalles, zwischen benachbarten Umschaltflanken abgefragt wird.

3. Verfahren nach einem der vorhergehenden Ansprüche, dadurch gekennzeichnet, daß der dem Strom entsprechende Wert bei jeder Halbwelle der rechteckförmigen Spannung abgefragt wird.

4. Verfahren, insbesondere nach einem der vorhergehenden Ansprüche, dadurch gekennzeichnet, daß die rechteckförmige Spannung aus einer Folge von positiven und negativen Rechteckpulsen besteht, wobei zwischen den Rechteckpulsen die Spannung für ein gewisses Zeitintervall den Wert 0 V annimmt.

5. Vorrichtung zur konduktiven Füllstand-Grenzwertmessung mit einem Rechteck-Oszillator als Spannungsgenerator, der einen eine Meßsonde enthaltenden Meßstromkreis mit Wechselstrom speist, und einer insbesondere eine Vergleicheranordnung enthaltenden Auswerteeinrichtung, die den im Meßstromkreis fließenden Strom auswertet und ein entsprechendes Ausgangssignal erzeugt, dadurch gekennzeichnet, daß der Vergleicheranordnung (12) ein Abtast- und Halteglied (16), insbesondere in Form eines gesteuerten Flipflops, nachgeschaltet ist, das periodisch bei jeder oder bei jeder zweiten Halbwelle der Ausgangsspannung des Rechteck-Oszillators (3) aber ausschließlich in der zweiten Hälfte der Halbwelle angesteuert wird.

6. Vorrichtung nach Anspruch 5, dadurch gekennzeichnet, daß das Abtast- und Halteglied (16) jeweils ausschließlich in der zweiten Hälfte einer Halbwelle der an den Meßstromkreis angelegten Rechteckspannung, vorzugsweise in deren letztem Viertel, für eine Abtastung angesteuert wird.

7. Vorrichtung nach Anspruch 5 oder 6, dadurch gekennzeichnet, daß der Takt für das Abtast- und Halteglied (16) von der Ausgangsspannung des Rechteck-Oszillators (3) unter Phasenversatz gegenüber der an den Meßstromkreis angelegten Spannung abgeleitet wird.

8. Vorrichtung nach einem der Ansprüche 5 bis 7, dadurch gekennzeichnet, daß dem Abtast- und Halteglied (16) ein RC-Integrator (18, 19) nachgeschaltet ist.

9. Vorrichtung nach einem der Ansprüche 5 bis 8, dadurch gekennzeichnet, daß der Vergleicheranordnung (12) eine Triggerstufe (20) nachgeschaltet ist, die das Ausgangssignal der Vorrichtung erzeugt, und daß zwischen den Ausgang der Triggerstufe (20) und die Vergleicheranordnung (12) eine Rückkopplungsschaltung (21; 26, 27) zur Umschaltung der Potentiale an der Vergleicheranordnung (12) bei Änderung der Ausgangsspannung der Triggerstufe (20) geschaltet ist.

10. Vorrichtung nach Anspruch 9, dadurch gekennzeichnet, daß die Rückkopplungsschaltung (21; 26, 27) einen Spannungsteiler (11, 21) umfaßt, dessen beide äußeren Anschlüsse mit dem Ausgang der Triggerstufe (20) und einem im Meßstromkreis liegenden Meßwiderstand (9) verbunden sind, während der Abgriff des Spannungsteilers (11, 21) mit einem Eingang der Vergleicheranordnung (12) verbunden ist.

11. Vorrichtung nach Anspruch 9, dadurch gekennzeichnet, daß die Rückkopplungsschaltung (26, 27) einen Transistor (26) aufweist, dessen Schaltzustand die Widerstandsverhältnisse eines Spannungsteilers (13 bis 15, 27) für die Gewinnung einer Referenzspannung für die Vergleicheranordnung (12) bestimmt.

12. Vorrichtung nach einem der Ansprüche 5 bis 11, dadurch gekennzeichnet, daß die Referenzspannung der Vergleicheranordnung (12) von der Ausgangsspannung des Rechteck-Oszillators (3) abgeleitet wird.

13. Vorrichtung nach einem der Ansprüche 5 bis 12, dadurch gekennzeichnet, daß parallel zur Meßsonde (7) ein Widerstand (22) geschaltet ist.

14. Vorrichtung nach einem der Ansprüche 5 bis 13, dadurch gekennzeichnet, daß zwischen die Meßsonde (7) und einen Meßwiderstand (9) im Meßstromkreis eine durch den Rechteck-Oszillator (3) gesteuerte Schalteranordnung (24, 25) zur periodischen Umpolung des Stromflusses durch die Meßsonde (9) geschaltet ist.

15. Vorrichtung nach Anspruch 5, dadurch gekennzeichnet, daß dem Rechteck-Oszillator (3) ein Frequenzteiler (23) nachgeschaltet ist, dessen Ausgangssignal die Schalteranordnung (24, 25) steuert.

16. Vorrichtung nach Anspruch 15, dadurch gekennzeichnet, daß dem Frequenzteiler (23) ein Phasenschieber (28) nachgeschaltet ist, der einen der Schalter (24) bzw. (25) ansteuert.

17. Vorrichtung nach einem oder mehreren der Ansprüche 5 bis 15, dadurch gekennzeichnet, daß die Ausgangsspannung des Rechteck-Oszillators (3) zwischen je zwei benachbarten Umschaltflanken den Spannungswert 0 V annimmt.

## Claims

1. A method for conductive level limit measurement wherein a measuring current circuit comprising a measuring probe is supplied with a square wave voltage and conductance value changes in the measuring current circuit are measured, in particular by comparison of a value corresponding to the current flowing in the measuring current circuit with a fixed reference value, characterized in that the value corresponding to the current is sampled and evaluated exclusively from the second half of an interval between two adjacent transition edges of the square wave voltage.

2. A method according to claim 1, characterized in that the value corresponding to the current is taken exclusively during the last quarter, and preferably the last tenth, of the interval between adjacent transition edges.

3. A method according to either of the preceding claims, characterized in that the value corresponding to the current is taken from each half-wave of the square wave voltage.

4. A method in particular according to any one of the preceding claims, characterized in that the square wave voltage is produced as a sequence of positive and negative rectangular pulses, where the voltage has the value 0 V for a certain period between the rectangular pulses.

5. A device for conductive level limit measurement comprising a square-wave oscillator as the voltage generator, which supplies a measuring current circuit comprising a measuring probe with an alternating current, and an evaluating device, in particular comprising a comparator, which evaluates the current flowing in the measuring current circuit and produces a corresponding signal, characterized in that a sample and hold device (16), in particular in the form of a controlled flip-flop, is connected to the comparator (12) which is switched on periodically by each or by every second half-wave of the output voltage of the square-wave oscillator (3) but only in the second half of the half-wave.

6. A device according to claim 5, characterized in that the sample and hold device (16) is in every case switched on for a sample reading exclusively in the second half of a half-wave of the square wave voltage applied to the measuring current circuit and preferably in its last quarter.

7. A device according to claim 5 or claim 6, characterized in that the signal pulse for the sample and hold device (16) is derived from the output voltage of the square-wave oscillator (3) with a phase shift relative to the voltage applied to the measuring current circuit.

8. A device according to any one of claims 5 to 7, characterized in that an RC integrator (18, 19) is connected after the sample and hold device (16).

9. A device according to any one of claims 5 to 8, characterized in that a triggering stage (20), which produces the output signal of the device, is connected after the comparator (12) and in that between the output of the triggering stage (20) and the comparison device (12) a feedback circuit (21; 26, 27) is connected for switching over the potential on the comparator (12) when the output voltage of the triggering stage (20) changes.

10. A device according to claim 9, characterized in that the feedback circuit (21; 26, 27) comprises a voltage divider (11, 21), the two external contacts of which are connected to the output of the triggering stage (20) and a measuring resistor (9) located in the measuring current circuit, whereas the tapping point of the voltage divider (11, 21) is connected to an input of the comparator (12).

11. A device according to claim 9, characterized in that the feedback circuit (26, 27) comprises a transistor (26) the switching state of which determines the resistive behaviour of a voltage divider (13 to 15, 27) for the production of a reference voltage for the comparator (12).

12. A device according to any one of claims 5 to 11, characterized in that the reference voltage of the comparator (12) is derived from the output voltage of the square-wave oscillator (3).

13. A device according to any one of claims 5 to 12, characterized in that a resistor (22) is connected parallel to the measuring probe (7).

14. A device according to any one of claims 5 to 13, characterized in that a switching arrangement (24, 25) controlled by the square-wave oscillator (3) is connected between the measuring probe (7) and a measuring resistor (9) in the measuring current circuit for periodic reversal of the direction of the current flow through the measuring probe (9).

15. A device according to claim 5, characterized in that a frequency divider (23) is connected to the square-wave oscillator (3) and its output signal controls the switching arrangement (24, 25).

16. A device according to claim 15, characterized in that a phase shifter (28) which controls one of the switches (24) or (25) is connected to the frequency divider (23).

17. A device according to one or more of claims 5 to 15, characterized in that the output voltage of the square-wave oscillator (3) has the voltage value 0 volts between two adjacent transition edges.

## Revendications

1. Procédé pour la mesure conductive de la valeur limite d'un niveau de remplissage dans lequel on alimente avec une tension de forme crénelée un circuit de mesure présentant une tête de mesure et l'on détecte des variations de susceptance dans le circuit de mesure, en particulier en comparant une valeur correspondant au courant passant dans le circuit de mesure à une valeur fixe de référence, caractérisé en ce que la valeur correspondant au courant est interrogée et exploitée exclusivement dans la seconde moitié d'un intervalle compris entre respectivement deux flancs voisins de commutation de la tension de forme crénelée.

2. Procédé selon la revendication 1, caractérisé en ce que la valeur correspondant au courant est interrogée exclusivement pendant le dernier quart, de préférence le dernier dixième, de l'intervalle compris entre deux flancs voisins de commutation.

3. Procédé selon l'une des revendications précédentes, caractérisé en ce que la valeur correspondant au courant est interrogée lors de chaque demi-onde de la tension de forme crénelée.

4. Procédé, en particulier selon l'une des revendications précédentes, caractérisé en ce que la tension de forme crénelée consiste en une suite d'impulsions rectangulaires positives et négatives, la tension prenant pendant un certain intervalle de temps la valeur OV entre les impulsions rectangulaires.

5. Dispositif pour la mesure conductive de la valeur limite d'un niveau de remplissage avec un oscillateur crénelé comme générateur de tension, qui alimente un circuit de mesure contenant une tête de mesure, avec une tension alternative, et avec un dispositif d'exploitation contenant en particulier un dispositif de comparaison, dispositif d'exploitation qui exploite le courant passant dans le circuit de mesure et produit un signal de sortie correspondant, dispositif pour la mesure conductive de la valeur limite d'un niveau de remplissage, caractérisé en ce qu'en aval du dispositif de comparaison (12) on monte un organe de détection et d'arrêt (16), en particulier sous la forme d'une bascule électronique commandée, organe qui est commandé périodiquement lors de chaque demi-onde ou lors de chaque deuxième demi-onde de la tension de sortie de l'oscillateur crénelé (3) mais exclusivement dans la seconde moitié de la demi-onde.

6. Dispositif selon la revendication 5, caractérisé en ce que l'organe de détection et d'arrêt (16) est commandé pour une détection exclusivement dans la deuxième moitié d'une demi-onde de la tension crénelée appliquée au circuit de mesure, de préférence dans son dernier quart.

7. Dispositif selon la revendication 5 ou 6, caractérisé en ce que la cadence pour l'organe de détection et d'arrêt (16) est dérivée de la tension de sortie de l'oscillateur crénelé (3) avec décalage de phase par rapport à la tension appliquée au circuit de mesure.

8. Dispositif selon l'une des revendications 5 à 7, caractérisé en ce que l'on monte en aval de l'organe de détection et d'arrêt (16) un intégrateur à combinaison résistance-capacité (RC) (18, 19).

9. Dispositif selon l'une des revendications 5 à 8, caractérisé en ce qu'en aval du dispositif de comparaison (12) on monte un étage de déclenchement (20), qui produit le signal de sortie du dispositif et en ce qu'entre la sortie de l'étage de déclenchement (20) et le dispositif comparateur (12) on branche un circuit de rétroaction (21, 26, 27) servant à inverser les potentiels sur le dispositif comparateur (12) lors du changement de la tension de sortie de l'étage de déclenchement (20).

10. Dispositif selon la revendication 9, caractérisé en ce que le circuit de rétroaction (21, 26, 27) comprend un diviseur de tension (11, 21) dont les deux raccords extérieurs sont reliés à la sortie de l'étage de déclenchement (20) et à une résistance de mesure (9) se trouvant dans le circuit de mesure, tandis que la prise du diviseur de tension (11, 21) est reliée à une entrée du dispositif comparateur (12).

11. Dispositif selon la revendication 9, caractérisé en ce que le circuit de rétroaction (26, 27) présente un transistor (26) dont l'état détermine les conditions de résistance d'un diviseur de tension (13 à 15, 27) pour l'obtention d'une tension de référence pour le dispositif comparateur (12).

12. Dispositif selon l'une des revendications 5 à 11, caractérisé en ce que la tension de référence du dispositif comparateur (12) est dérivée de la tension de sortie de l'oscillateur crénelé (3);

13. Dispositif selon l'une des revendications 5 à 12, caractérisé en ce qu'en parallèle à la tête de mesure (7) on branche une résistance (22).

14. Dispositif selon l'une des revendications 5 à 13, caractérisé en ce qu'entre la tête de mesure (7) et une résistance de mesure (9) dans le circuit de mesure, on branche un dispositif de commutation (24, 25) commandé par l'oscillateur crénelé (3) servant à renverser périodiquement le courant à travers la tête de mesure (9).

15. Dispositif selon la revendication 9, caractérisé en ce que l'on branche en aval de l'oscillateur crénelé (3) un diviseur de fréquence (23), dont le signal de sortie commande le dispositif de commutation (24, 25).

16. Dispositif selon la revendication 15, caractérisé en ce que l'on branche en aval du diviseur de fréquence (23) un décaleur de phase (28), qui commande l'un des commutateurs (24) ou (25).

17. Dispositif selon une ou plusieurs des revendications 5 à 15, caractérisé en ce que la tension de sortie de l'oscillateur crénelé (3) prend la valeur de tension OV entre respectivement deux flancs voisins de commutation.
